(19) **Europäisches Patentamt**

**European Patent Office**

**Office européen des brevets**

(11) **EP 0 577 310 B1**

(12) **EUROPEAN PATENT SPECIFICATION**

(45) Date of publication and mention
of the grant of the patent:
**21.11.2001 Bulletin 2001/47**

(51) Int Cl.$^7$: **H04N 7/50**

(21) Application number: **93304848.0**

(22) Date of filing: **22.06.1993**

(54) **Image processing device**

Bildverarbeitungsvorrichtung

Dispositif de traitement d'image

(84) Designated Contracting States:
**DE ES FR GB IT NL**

(30) Priority: **29.06.1992 JP 19496492**
**28.12.1992 JP 36013292**

(43) Date of publication of application:
**05.01.1994 Bulletin 1994/01**

(73) Proprietor: **CANON KABUSHIKI KAISHA**
**Tokyo (JP)**

(72) Inventors:
• **Takeuchi, Yoshitaka,**
**c/o Canon Kabushiki Kaisha**
**Tokyo (JP)**
• **Kato, Masato, c/o Canon Kabushiki Kaisha**
**Tokyo (JP)**

(74) Representative:
**Beresford, Keith Denis Lewis et al**
**BERESFORD & Co.**
**High Holborn**
**2-5 Warwick Court**
**London WC1R 5DJ (GB)**

(56) References cited:
**EP-A- 0 296 948**      **EP-A- 0 466 331**
**EP-A- 0 479 511**      **EP-A- 0 499 088**
**WO-A-91/11074**

• **6TH MEDITERRANEAN ELECTROTECHNICAL CONFERENCE, vol.1, 22 May 1991, LJUBLJANA, SLOVENIA pages 428 - 431, XP289486 E.J.LALOYA-MONZON ET AL. 'DSP Parallel Architecture for Image Compression'**
• **SIGNAL PROCESSING OF HDTV, III, 4 September 1991, ELSEVIER, AMSTERDAM, NL pages 275 - 282, XP379962 S. NOGAKI ET AL. 'An HDTV Programmable Codec'**
• **IEEE INTERNATIONAL CONFERENCE ON SYSTEMS ENGINEERING, 24 August 1989, FAIRBORN, OHIO pages 169 - 172, XP89036 T. NISHITANI ET AL. 'Programmable Parallel Processor for Video Processing'**
• **IEEE INTERNATIONAL CONFERENCE ON COMMUNICATIONS ICC '90, vol.3, 15 April 1990, ATLANTA, GEORGIA, US pages 1054 - 1058, XP145991 I. TAMITANI ET AL. 'A Real-Time HDTV Signal Processor: HD-VSP. System and Applications'**
• **IEEE TRANSACTIONS ON CIRCUITS AND SYSTEMS FOR VIDEO TECHNOLOGY, vol.1, no.1, 1 March 1991, NEW YORK, US pages 4 - 13, XP208635 M. BARBERO ET AL. 'A Bit-Rate Reduction System for HDTV Transmission'**

EP 0 577 310 B1

**Description**

FIELD OF THE INVENTION

This invention relates to a device for processing an image signal, especially a processing device which is suitable for handling a motion image signal, for handling a high speed signal, or for detecting a motion of the image signal and compensating the device for the influence of the unwanted motion.

DESCRIPTION OF THE RELATED ART

Recently, it was known that some encoding methods for encoding a digital image signal to decrease a data amount thereof were used for transmitting the motional image signal. For instance, a predictive encoding system and an encoding system using DCT (Discrete Cosine Transform) are known.

In these encoding systems, motion detection between adjacent fields or frames and motion compensation by using the motion detection have already been put into effect. The motion compensation is carried out by searching similar image elements in an adjacent field or frame to image elements in a field or frame to be encoded to improve the compressional efficiency of digital image data.

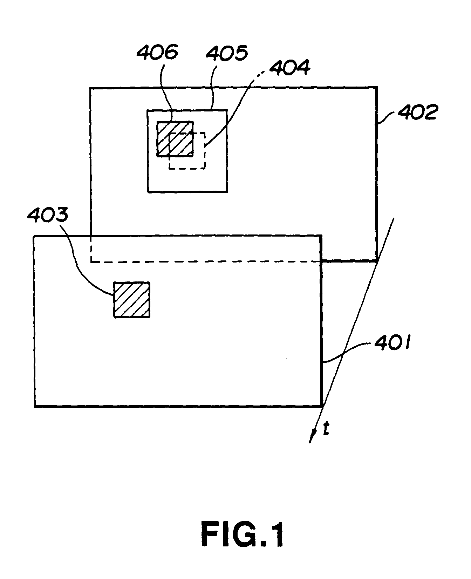

At first, an instance of the motion detection is briefly described by using Figure 1 as follows. In Figure 1, 401 shows a present frame as a subject frame to be encoded. In the present frame, image data of the whole frame are divided into blocks each of which has (NxN) pixels, N being an integer two or more. 403 shows one of divided blocks in the present frame. A searching area 405 of a suitable extent is prepared in a preceding frame 402 to the present frame and is positioned around a block 404 which is put on the same position in a frame as the block 403 to be encoded. A block 406 having the same extent as the block 404 is put on various positions in the searching area 405. Then in each of the various positions, a sum of absolute values of differences between all corresponding pixels in the block 403 and the block 406 is calculated by using a following numeral formula (1):

$$S(a,b) = \sum_{i=1}^{N^2} | \; Pi \; (x,y) \; - \; i \; (x-a, \; y-b) \; | \; \ldots \; (1)$$

In the numeral formula (1), Pi (x,y) is data of i-th pixel in the present block 403, i (x-a, y-b) is data of i-th pixel in the block 406 which is positioned at a certain position within the searching area 405 in the preceding frame 402.

Next, a proper position of the block 406 (a proper block 406) is decided in the searching area 405 such that the proper block has the least sum value S (a,b), and then a motion vector for the present block 403 is decided. These processes are carried out for each block in a whole present frame.

In the above-mentioned instance, the sum of the absolute values of the differences between each two blcoks is calculated. However, the motion vector can be provided by some other methods to be able to detect a motion of images for an efficiency of encoding. For example, the method can include a step for calculating a square of the differences or a step for computing non-linear characteristics.

In general, images in adjacent frames are similar with each other except for unwanted movements added to the original signal. Therefore some encoding system use a calculation step for calculating differences between values to be encoded and predictive values thereof. The predictive values are provided from a pixel or pixels having a correlation with a pixel to be encoded. The already-mentioned motion vector is used for seeking the pixel which has the deepest correlation with the pixel to be encoded.

In this way, it becomes possible to decrease the data volume of the image signal more efficiently.

However, there are some problems when applying above-mentioned prior encoding system to a high-speed signal which needs high-speed processing, for example a high definition television (HDTV) signal provided by a HDTV system. This is because higher-speed processing requires more expensive devices and more complex hardware. For instance, it is necessary for sampling the HDTV signal at a high sampling frequency, e.g. 74.25 MHz or 37.125 MHz, and encoding the sampled signal that hardware circuits have to be composed of high-speed processing device, e.g. ECL (emitter-coupled logic). It causes a higher cost and larger hardware that a lot of such high-speed processing devices are used.

A concern of the invention is to provide a device, for processing an image signal which can solve above-mentioned problems in an efficient manner.

An article by T. Nishitani et al, entitled "Programmable Parallel Processor for Video Processing"; in IEEE International Conference on Systems Engineering, 24-26 August 1989, Fairborn, Ohio pages 169-172 discloses a video processor in which an input signal is divided into a plurality of code groups which are processed by a plurality of processing means each of which includes a motion detection circuit. A high-speed feed-back bus enables overlap processing of images.

In addition to the above-mentioned article International patent specification no. WO-A-9111074 discloses a high definition coder or decoder which includes a number of parallel sub-decoders or coders. The image to be coded or decoded is divided into stripes with a given stripe being coded or decoded by a single sub-coder or sub-decoder.

European patent specification No. EP-A-479511 discloses a motion compensated predictive coding/decoding system in which the picture signal is divided into a plurality of blocks which are coded/decoded by a plurality of processors.

European patent specification No. EP-A-466331 discloses a motion image difference detecting apparatus for a conferencing system. The apparatus includes first and second memories which can store overlap areas of image data so that a difference can be detected between a present frame image and the preceding frame image.

One particular concern of this invention is to provide an image signal processing device which can process a high-speed image signal with a reduced amount of high-speed processings even if the device has motion detecting means.

According to one aspect of the invention there is provided an image coding device as set out in claim 1. According to another aspect of the invention there is provided an image decoding device as set out in claim 6.

Other inventive aspects and features of the invention will be apparent from the following description which refers to drawings, as will advantages of these aspects of the invention.

BRIEF DESCRIPTION OF THE DRAWINGS

Figure 1 shows a divided block of a present frame and a seeking area of a preceding frame to describe motion detection.

Figure 2 is a block diagram showing an example of an encoding device.

Figure 3 shows a model of one frame of the digital image signal to explain a concrete example of dividing the digital image signal into four processing code groups.

Figure 4(a) shows a model of a part of codes in the present frame, and Figure 4(b) shows a model of a part of codes in the preceding frame.

Figure 5 shows a seeking area and a corresponding block positioned at the same position as the encoding block of the present frame.

Figure 6 is a block diagram of a first embodiment of an encoding device of the present invention.

Figure 7 is a more detailed diagram of the encoding device shown in Figure 6.

Figure 8 is a block diagram of a decoding device corresponding to the encoding device shown in Figure 6.

Figure 9 shows principal parts of the decoding device shown in Figure 8.

Figure 10 is a block diagram showing an encoding device as a second embodiment of the invention.

Figure 11 is a more detailed diagram of the encoding device shown in Figure 10.

Figure 12 is a block diagram of a decoding device corresponding to the encoding device shown in Figure 10.

Figure 13 is also a block diagram of the decoding device shown in Figure 12.

DETAILED DESCRIPTION OF PREFERRED EMBODIMENTS

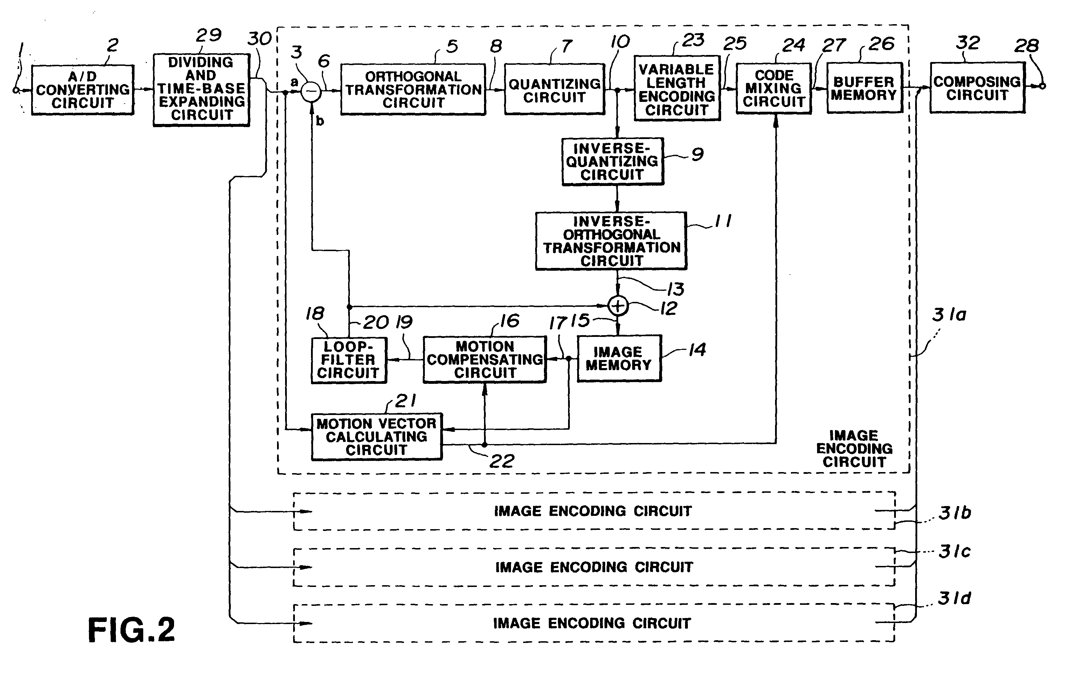

Figure 2 shows a principal portion of an encoding device.

In Figure 2, 1 shows an input terminal for inputting an analogue image signal; 2 shows an A/D (analogue-to-digital) converting circuit for converting the input analogue signal to a digital image signal; 3 shows a predictive error calculation circuit for calculating differences between an image signal of a present frame 30 and a predictive image signal 20 described afterward to provide a predictive error signal 6; 5 shows an orthogonal transformation circuit for transforming the predictive error signal based on an orthogonal transformation; and 7 shows a quantizing circuit for quantizing orthogonal transformed coefficients 8 outputted from the orthogonal transformation.

9 shows an inverse quantizing circuit for inverse-quantizing quantized orthogonal-transformed coefficients (predictive error signal) 10; 11 shows an inverse orthogonal transformation circuit for inverse orthogonal-transforming the inverse-quantized orthogonal-transformed coefficients; 12 shows a reproduction image calculating circuit for calculating a reproduced image signal 15 of the present frame by adding a predictive error signal 13 inverse-orthogonal transformed and the predictive image signal 20; 14 shows an image memory for storing the reproduced image signal of the present frame; 16 shows a motion compensating circuit for compensating a reproduced image signal of the preceding frame 17 for a motion between present frame and preceding frame; and 18 shows a loop-filter circuit for filtering the motion-compensated image signal 19 to pass low frequency components in a two-dimensional frequency area for providing the predictive image signal 20.

21 shows a motion vector calculating circuit for calculating a motion vector 22 by comparing the image signal of the present frame 30 with the reproduced image signal of the preceding frame for every block to be recorded; 23 shows a variable length encoding circuit for encoding the predictive error signal 10 to transform into codes having a variable-length; 24 shows a code mixing circuit for mixing predictive error codes 25 and codes indicating motion vectors 22 to form transmissive-framed encoding codes 27; 26 shows a buffer memory for temporarily storing the transmissive-framed encoded codes 27 to transmit them at a predetermined transmitting speed; and 28 shows an output terminal for outputting transmissive codes to a transmissive path.

29 shows a dividing and time-base expanding circuit which has a circuit for dividing the digital image signal codes provided by A/D converting circuit 2 into K (>2) of processing code or sub-image groups, a circuit for further dividing each of the processing groups into a plurality of encoding code blocks, and a circuit for time-base expanding a signal composed of each of the processing code groups to lower the processing speed of each of the processing code groups. The dividing and time-base expanding circuit outputs the image signal of the present frame 30 in parallel. One of the image signals of the present frame 30 is supplied to the predictive error caclulation circuit 3.

31a,31b,31c and 31d show image encoding circuits which have the same structure composed of the circuits 3 ~ 26 as each other, and each of the circuits 31a,31b,31c and 31d handles one of K of the divided processing code groups. Further, it is assumed that above-mentioned K is four and there are four image encoding circuits.

32 shows a composing circuit for composing one encoded code sequence from four channels of the encoded codes processed through the circuits 31a,31b,31c and 31d at every processing code group.

Operation of above-mentioned example is described as follows.

Firstly, the analogue image signal input from the input terminal 1 is converted to the digital image signal by the A/D converting circuit 2. In case that the analogue image signal is the HDTV signal, for instance, a select sampling frequency for a luminance signal is 74.25 MHz and a select sampling frequency for a colour-difference signal is 37.125 MHz.

The dividing and time-base expanding circuit 29 writes the digital image signal in a memory which is equipped for dividing the digital image signal into K (= four) of the processing code groups in the circuit 29.

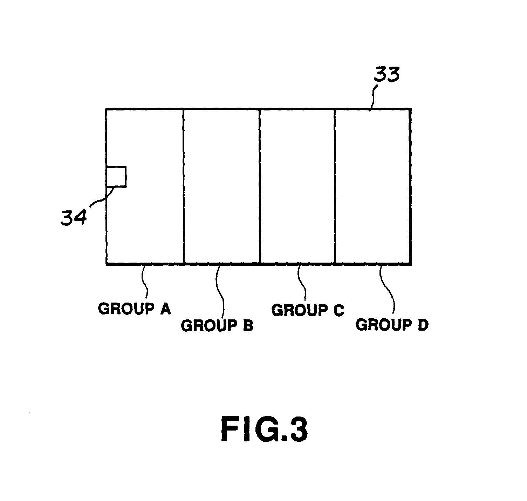

Figure 3 shows a model of one frame of the digital image signal (codes) to explain a concrete example of dividing the digital image signal into four processing code groups. In Figure 3, 33 shows how one frame of digital codes arranged as actual pixels is arranged on an image. As shown in Figure 3, one frame of digital codes is divided into four processing code groups, namely, group A, group B, group C and group D. Each of the processing code groups is composed of codes corresponding to pixels which are in an unseparated area in a frame. In short, there are four divided areas in each frame.

In case one memory unit is able to store codes of one processing code group, a writting operation for each frame of the digital image signal is carried out by respectively using four memory units. A reading operation is carried out such that four divided code groups, as shown in Figure 3, are read from the four memory units in parallel.

In the reading operation, each of processing code groups are read from one of the four memory units with a time-base expansion which is carried out so that a period of time for reading one processing code group does not exceed a period of time for one frame of the image signal. Owing to the time-base expansion, subsequent processing can be slow.

In the reading operation, each of the processing code groups are further divided into a plurality of encoding blocks 34, and divided encoding blocks are read out one after another from the each of the four memory units. Each of the encoding blocks are composed of (MxN) pixels having M continuous pixels in a horizontal direction of the frame and N continuous pixels in a vertical direction of the frame.

Output codes from the dividing and time-base expanding circuit 29 are distributed among the four image encoding circuits 31a,31b,31c and 31d, and the four processing code groups are supplied to inputs (a) of four predictive error calculation circuits 3 and four motion vector calculating circuits 21 respectively. The four image encoding circuits 31a,31b,31c and 31d have quite the same circuits, therefore only the image encoding circuits 31a is described as follows.

An input (b) of the predictive error calculation circuit 3 receives the predictive image signal (codes) 20. The circuit 3 calculates differences between the image signal (codes) of the present frame 30 and the predictive image signal (codes) 20, and output results of the calculation as the predictive error signal 6.

The orthogonal transformation circuit 5 orthogonal transforms the predictive error signal (codes) 6 and outputs predictive-erred orthogonal transformed coefficients 8. As the system of the orthogonal transformation, DCT is used because as is well known it is easily realized.

The quantizing circuit 7 quantizes the orthogonal transformed coefficients 8, calculates predictive-erred, orthogonal transformed and quantized coefficients, and outputs them as the predictive error signal 10.

On the other hand, the inverse-quantizing circuit 9 inverse-quantizes the predictive error signal (codes) 10, and the inverse-orthogonal transforming circuit 11 inverse-orthogonal transforms inverse-quantized coefficients and calculates the predictive error signal 13 including some inverse-quantized errors. The reproduction image calculating circuit 12 adds the predictive error signal 13 including some inverse-quantizing errors and the predictive signal 20 outputted from the loop-filter circuit 18, and calculates the reproduced image signal (codes) 15 of the present frame which is encoding for each of the encoding blocks.

The image memory 14 stores the reproduced image codes 15 of the present frame and outputs the reproduced image codes (signal) of the preceding frame 17 stored therein. The motion vector calculating circuit 21 compares the image codes of the present frame 30 and the reproduced image codes of the preceding frame 17 stored in the image memory 14, and outputs motion vectors for each of the encoding blocks. Further, a process concerning encoding blocks near boundaries among the four divided areas shown in Figure 3, is described afterward.

The motion compensating circuit 16 compensates the reproduced image signal of the preceding frame 17 for the motion according to the motion vectors, and outputs the motion-compensated image signal. To be concrete the motion compensating circuit 16 outputs codes of similar (MxN) pixels to (MxN) pixels of the encoding block to be encoded, at timings when the (MxN) pixels to be encoded input to the predictive-error calculation circuit. It is for that object that the motion compensating circuit 16 delays each pixels for various times and changes the order of the pixels.

The loop-filter circuit 18 filters the motion-compensated image code of each of the encoding blocks to pass only low frequency components in the two-dimensional frequency area, and outputs filtered codes as the predictive signal (codes) 20. The predictive codes 20 are supplied to the predictive-error calculation circuit 3 and the reproduction image calculating circuit 12. The loop-filter circuit 18 executes above-mentioned filtering process by only using codes included in the same processing group as codes to be filtered.

On the other hand the variable length encoding circuit 23 changes the order of the orthogonal transformed coefficients (the predictive error signal) 10 quantized by the quantizing circuits 7, and variable length encodes the quantized, re-ordered coefficients to output the predictive error codes (encoded codes) 25.

The code mixing circuit 24 encodes the motion vectors, mixes the encoded motion vectors with the predictive error codes 25, and outputs the transmissive formed encoded codes 27 which is formed according to a predetermined data arrangement.

The buffer memory 26 temporary stores the transmissive formed encoded codes 27, and supplies them to the composing circuit 32. The composing circuit 32 forms one encoded code sequence having the original high data rate. And the encoded code sequence is outputted from the output terminal 28 to the transmission path.

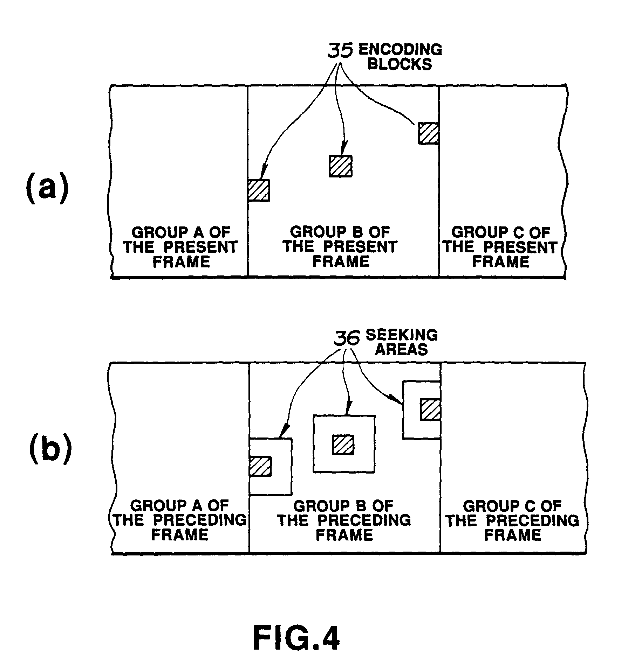

Next, a process of seeking a motion vector in the motion vector calculating circuit 21 is described with reference to Figure 4(a) and Figure 4(b). Figure 4(a) shows a model of a part of codes in the present frame, especially codes in the processing code group B, and Figure 4(b) shows a model of a part of codes in the preceding frame, especially codes in the processing code group B.

In Figure 4(a) and 4(b), hatched portions 35 shows the encoding blocks, one of which positions near a boundary between the processing code groups A and B, other of which positions in a middle of the area corresponding to the processing code group B, and remaining one of which positions near a boundary between the processing code groups B and C. In Figure 4(b), portions 36 shows seeking areas which are prepared corresponding to the blocks to be encoded respectively. In short, a block of (MxN) pixels having a highest correlation with the block 35 to be encoded is seeked in a respective seeking area 36.

The four processing code groups are individually processed in the four image encoding circuits 31a ~ 31d. Therefore, each of the image encoding circuits is not able to use codes in other processing code groups. Accordingly, as shown in Figure 4(b), seeking areas corresponding to encoding blocks positioned near the boundaries are limited in smaller areas than other seeking areas. These limiting processes are executed by software processes carried out by the motion vector calculating circuit 21.

These processes are described in detail as follows. Firstly, they discriminate a position of a present encoding block and determine the seeking area thereof. Secondly, they compare codes of (MxN) pixels corresponding to the present encoding block with codes of (MxN) pixels in the seeking area. Such comparisons are executed for all (MxN) pixels in the seeking area of the preceding frame. Additionally, they select most similar (MxN) pixels by calculating a sum of absolute values of difference between all corresponding pixels, as mentioned above. Then, they decide a motion vector for the present encoding block according to a relative position between the present encoding block and the most similar (MxN) pixels.

If the most similar (MxN) pixels are in other processing code groups, in short, they are not in the seeking area, the motion vector is not decided according to them. For example, in case that the encoding block in the processing code group B is close to the boundary between the processing code groups A and B, the motion vector cannot be decided according to (MxN) pixels including codes in the processing code group A, even if the (MxN) pixels are most similar to pixels of the encoding block. Accordingly, in that case, a motion vector indicating a motion from a left side to a right side cannot be selected. Then, that is to say, the motion vector is also limited.

Further, needless to say, seeking areas for encoding blocks positioned near to edges of a frame are limited, and motion vectors for them are also limited.

As described above, an encoding device can slow a speed of processing for the motion compensation. In other words it can handle a higher speed signal than the prior device. It also can be easily controlled, can reduce the amount of the hardware, and can reduce the price thereof, because it divides the image signal into K number of processing groups and individually processes these groups.

The above-mentioned example divides the image signal into a plurality of processing code groups by dividing an area of each frame in a horizontal direction. Further an encoding device, which divides the image signal by dividing an area of each frame in a vertical direction, can bring good results just like the above-mentioned example.

And the example divides the image signal into four processing groups, and an encoding device dividing the image signal two or more processing groups can bring good results like the example.

Further the example detects a motion between adjacent frames, and a device detecting a motion between adjacent field or a device detecting a motion between an adaptable field or frame can bring as good results as the example. Further, in this invention, one field or one frame is called one picture.

Further, only encoding device is described about the example, and a decoding device corresponding to above-mentioned encoding device can process the image signal passed through the transmission path by dividing the image signal into a plurality of processing code groups, as mentioned in following embodiments.

As described above, the example greatly improves the slowing of the processing speed, on the other hand motion vectors corresponding to the encoding blocks positioned near boundaries between areas corresponding to processing code groups are limited. These limitation may cause to come out inferior images around the boundaries.

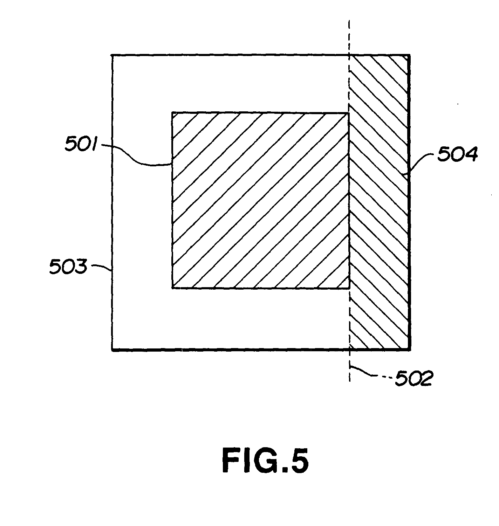

Figure 5 shows the seeking area 503 and a corresponding block positioned at the same position as the encoding block of the present frame. And 502 shows a boundary between the processing code groups. As described above, when the encoding block being close to the boundary 502, the seeking area 503 is limited. 504 shows an invalid area for using the seeking area, and this invalid area is hatched in the Figure 5. In other words, this invalid area 504 sometimes causes to come out inferior images in the encoding block being close to the boundary 502.

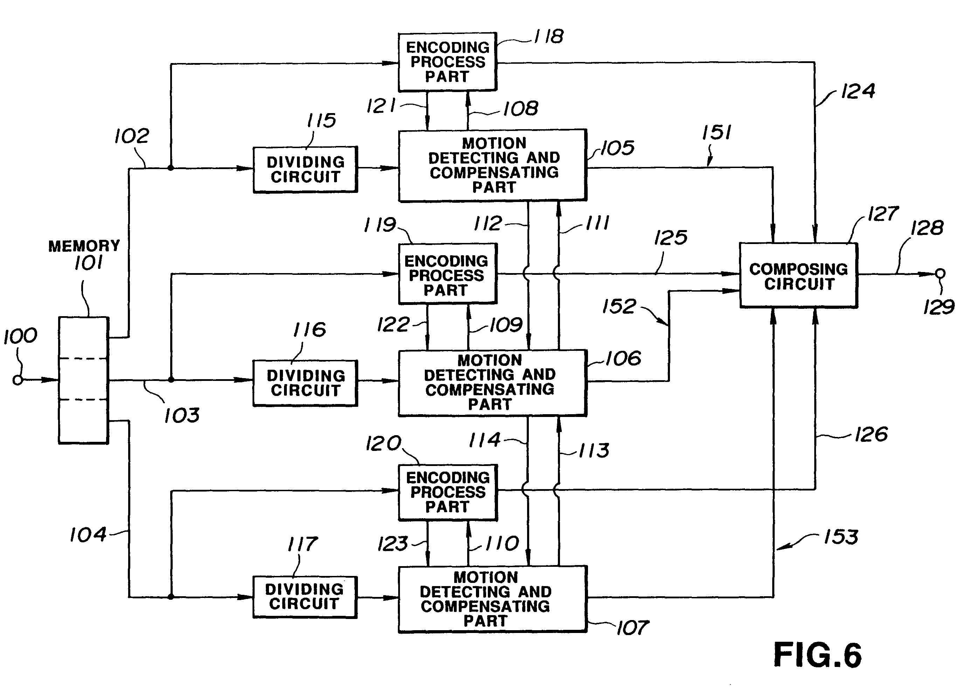

Figure 6 is a block diagram showing an encoding devices as a first embodiment of this invention. This device divides the image codes into three processing code groups. Each of the processing code groups corresponds to a continuous divided area in a frame, as in the example.

Image data inputted from an input terminal 100 are supplied to a memory 101. The memory divides the image data into three processing sub-image groups, and data of each sub-image groups is time-base expanded. The data of the three sub-image processing groups are supplied to dividing circuits 115, 116 and 117 by respective lines 102, 103 and 104.

The dividing circuits 115, 116 and 117 divide the codes into a plurality of code blocks respectively. Each of the code blocks is composed of codes corresponding to (AxB) pixels, A and B being 2 or more.

In this device, each groups of image codes which is not divided into the code blocks is supplied to encoding process parts 118, 119 and 120. Therefore, these encoding process parts 118, 119 and 120 do not have to execute encodings by the code blocks as a unit.

Each of the code blocks divided by the dividing circuits 115, 116, 117 is supplied to motion detecting and compensating parts 105, 106, 107. These parts 105, 106, 107 detect motion vectors and output vector codes according to the motion vectors to lines 151, 152, 153. They compensate image codes from the encoding process parts 118, 119, 120 via lines 121, 122, 123 for the motion in accordance with the motion vectors detected therein. The compensated image codes are returned to the encoding process parts 118, 119, 120 via lines 108, 109, 110. Encoded image codes and the vector codes are supplied to the composing circuit 127 via lines 124, 125, 126 for forming one encoded code sequence having a high data rate. Then, the encoded code sequence is outputted from an output terminal 129 via a line 128.

Lines 111, 112, 113, 114 are provided for handing or transferring some codes from one of the motion detecting and compensating parts 105, 106, 107 to another one. Accordingly, each of the parts 105, 106, 107 can refer to a part of the image codes of other processing code groups. In other words, each of the parts 105, 106, 107 can refer to some image codes in other continuous divided area. This operation is one of the characteristics of this embodiment, and is described in detail as follows.

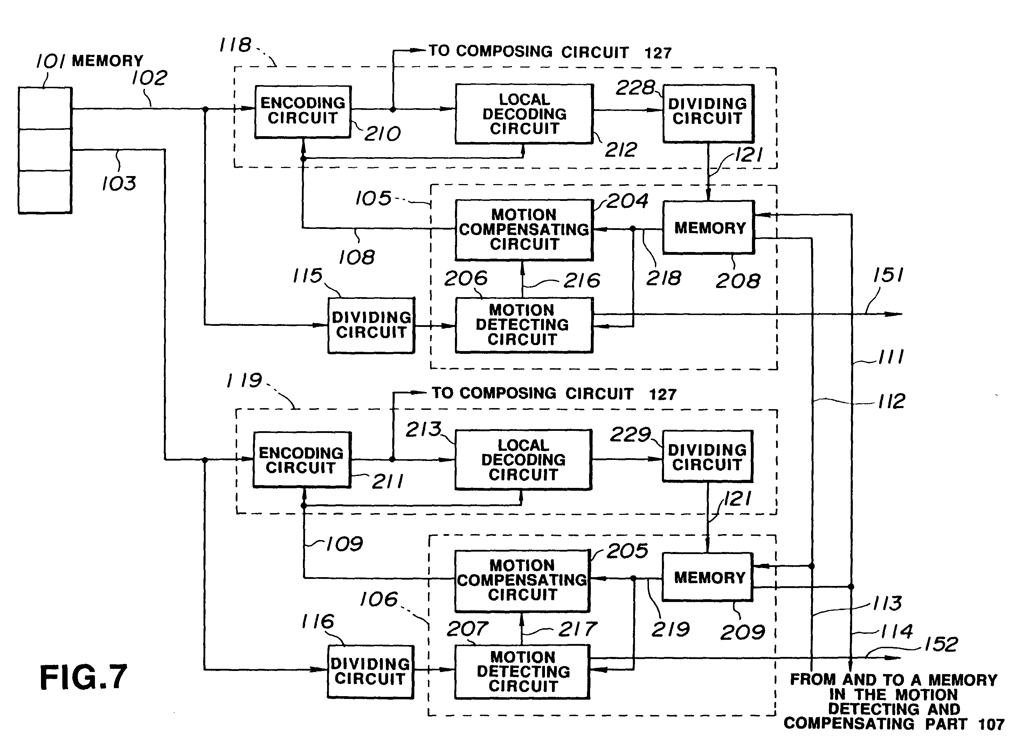

Figure 7 shows the encoding device shown in Figure 6 in greater detail. In Figure 7, the same numbers are used for the same elements in Figure 6.

Image codes of the first image processing group are supplied to an encoding circuit 210 in the encoding process part 118 via the line 102. The encoding circuit 210 encodes them to compress their data amount by using the image codes of the preceding frame, for instance, the encoding circuit 210 executes a well known predictive differential coding which calculates a predictive value by using the image codes of the preceding frame on the line 108 provided by the motion detecting and compensating part 105.

The encoded codes outputted from the encoding circuit 210 are supplied to the composing circuit 127 as above described, and are also supplied to a local decoding circuit 212. The local decoding circuit 212 decodes the encoded codes by processing them in opposite processes which uses the image codes of the preceding frame on the line 108. Then decoded image codes from the local decoding circuit are supplied to a dividing circuit 228 which divides them into the code blocks in the same manner as the dividing circuit 115. A memory 208 is arranged to be able to store the decoded image codes the amount of which is more than one third of the amount of codes of one frame.

The motion detecting circuit 206 receives the image codes of the present frame from the dividing circuit 115 and the image codes of the preceding frame from the memory 208 via a line 218. And the motion detecting circuit 206 detects the motion vectors for each code blocks by the same process as the motion vector calculating circuit 21 shown in Figure 2 and outputs the motion vector formed thereby to the line 151. The detected motion vectors are subsequently supplied to a motion compensating circuit 204 via a line 216 for compensating the decoded image codes of the preceding frame for the motion. The motion compensating circuit 204 works as same as the motion compensating circuit 16 also shown in Figure 2.

Further, circuits 205, 207 and 209 in the motion detecting and compensating part 106 work as same as the circuits 204, 206 and 208 in the motion detecting and compensating circuit 105 for another sub-image group. And circuits 211, 213 and 229 in the encoding process part 119 works as same as the circuit 210, 212 and 228 in the encoding process part 118.

The lines 111 and 112 are provided for handing the image codes between memories 208 and 209, and lines 113 and 114 are provided for handing the image codes between the memory 209 and a memory in the motion detecting and compensating part 107.

In case that the encoding block to be encoded is close to the boundary 502, as shown in the number 501 of Figure 5, between the first and second processing code groups which are processed by the motion detecting and compensating parts 105 and 106, the motion detecting circuit 206 and the motion compensating circuit 204 can refer above-mentioned area 504 shown in Figure 5. Image codes in the area 504 are handed from the memory 209 to the memory 208 through the line 111, and the memory 208 becomes able to supply the image codes corresponding to the area 504 to the motion detecting circuit 206 and the motion compensating circuit 204. Similarly, a part of the image codes in the first processing code group are handed from the memory 208 to the memory 209 through the line 112, accordingly, the motion detecting circuit 207 and the motion compensating circuit 205 can refer the image codes of the part of the first processing code group which are near to the boundary. And, also similarly, the motion detecting and compensating part 106 can use a part of the codes in the third processing code group handed through the line 113 and the motion detecting and compensating part 107 can use a part of the codes in the second processing code group handed through the line 114.

Therefore, the encoding device described by using Figure 6 and Figure 7 solves the problem of limiting motion vectors, and prevents the generation of inferior images around the boundaries among the processing code groups. This device improves the slowing of the speed of processing for encoding similar to the device described with reference to Figure 2.

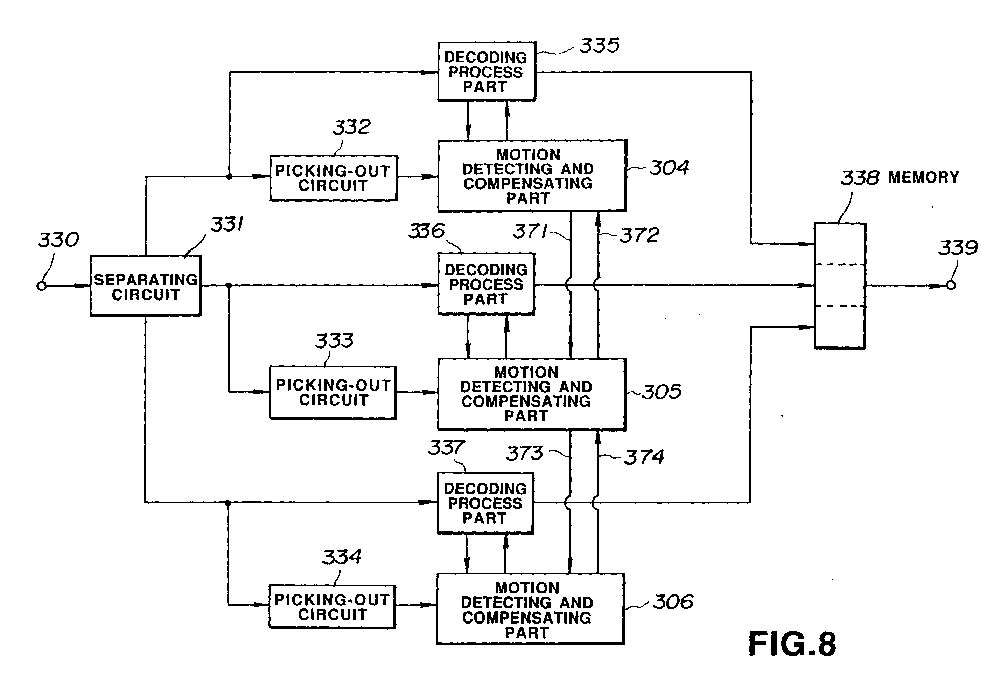

Figure 8 shows a decoding device corresponding to the encoding device shown in Figure 6. In the decoding device shown in Figure 8, the encoded code sequence transmitted through the transmission path is input from an input terminal 330 and is supplied to a separating circuit 331. The separating circuit 331 distributes codes included in the encoded code sequence among three lines which is connected to decoding process parts 335,336,337 and picking out circuits 332,333,334 respectively.

The decoding process parts 335,336,337 decode the encoded image codes respectively. The picking out circuits 332,333,334 pick up the vector codes. Motion detecting and compensating parts 304,305,306 receive the vector codes and restore the motion vectors. The parts 304,305,306 compensate decoded image codes from the decoding process parts 335,336,337 for the motion in accordance with the restored motion vectors. Compensated image codes are returned to the decoding process parts 335,336,337.

Decoded image codes obtained by the decoding process parts 335,336,337 are supplied to a memory 338. Then the memory 338 outputs the decoded image codes in the order according to that of original image data.

Lines 371,372,373,374 are provided for handing some codes from one of the motion detecting and compensating parts 304,305,306 to another one. Therefore, each of the parts 304,305,306 can refer a part of the image codes of other processing code groups as same as the parts 105,106,107 shown in Figure 6.

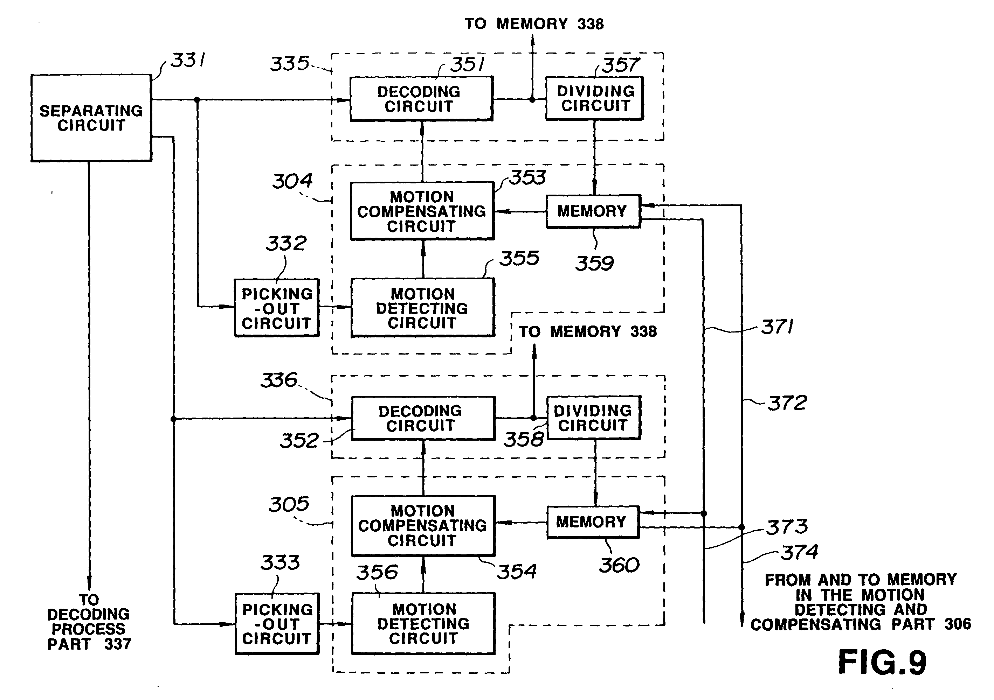

Figure 9 shows principal parts of the decoding device shown in Figure 8. In Figure 9, the same numbers are used for the same elements in Figure 8.

The encoded image codes corresponding to the first image processing group are supplied to a decoding circuit 351 in the decoding process part 335. The decoding circuit 351 decodes the encoded image codes to restore original image codes by using the restored image codes of the preceding frame provided by the motion detecting and compensating part 304.

The restored image codes outputted from the decoding circuit 351 are supplied to the memory 338 and a dividing circuit 357. The dividing circuit 357 divides the restored image codes into the code blocks by the same processing as the circuits 115,228. A memory 359 is arranged to be able to store the restored image codes (decoded image codes) an amount of which is more than one third of the amount of original image codes of one frame.

A motion detecting circuit 355 receives the vector codes from the picking out circuit 332, and restores the motion vectors for each code blocks. The restored motion vectors are supplied to a motion compensating circuit 353 which compensates the restored image codes of the preceding frame for the motion. A concrete operation of the motion compensating circuit 353 is also same as the motion compensating circuit 16 shown in Figure 2.

Further, circuits 352,354,356,358,360 work as same as the circuits 351,353,355,357,359 for another processing code group. Lines 371,372 are provided for handing the image codes between the memories 359 and 360, and lines 373,374 are provided for handing the image codes between the memory 360 and a memory arranged in the part 306.

Accordingly, a part of the image codes in the first processing code group are handed from the memory 359 to the memory 360 through the line 371. Then, the motion compensating circuit 354 can compensate the image codes as if the motion vectors restored in the motion detecting circuit demand image codes included in the first processing code group. Similarly, a part of the image codes in the second processing code group are handed from the memory 360 to the memory 359 through the line 372. In short, each motion compensating circuits can refer the image codes included in other processing code group than the group which corresponds to the image codes mainly handled in the motion compensating circuit.

Therefore, the decoding device described by using Figure 8 and Figure 9 can compensate the restored image codes for the motion in accordance with motion vectors which is not limited. That is to say that inferior images around the boundaries hardly occur.

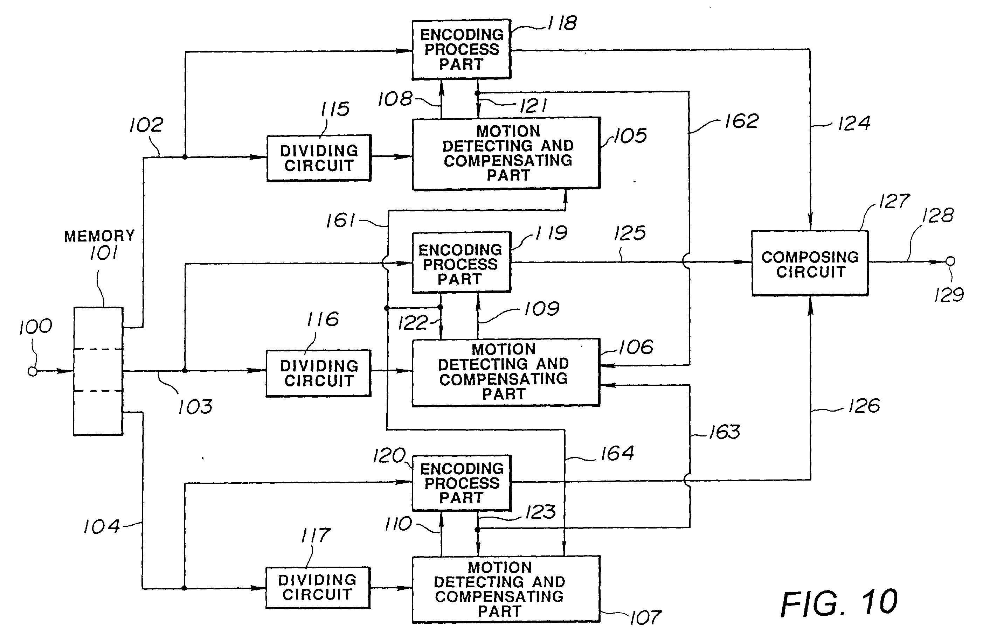

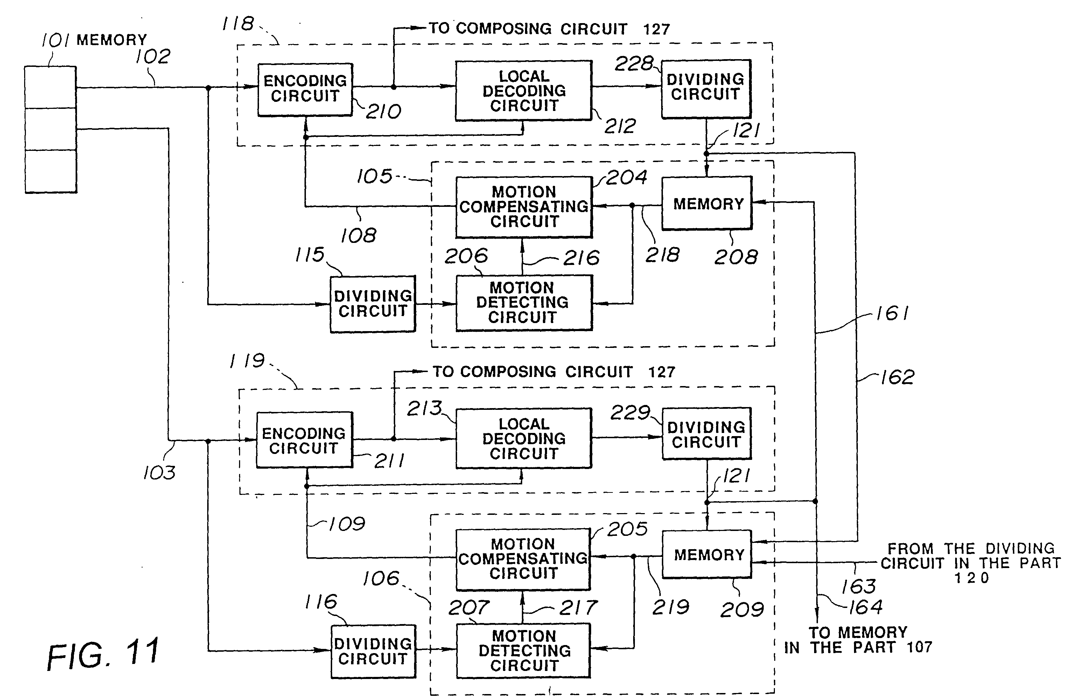

Figure 10 shows an encoding device as second embodiment of this invention. Figure 11 shows the encoding device shown in Figure 10 in greater detail. In Figures 10 and 11, the same numbers are also used for the similar elements in Figures 6 and 7.

The encoding device shown in Figures 10 and 11 has lines 161, 162, 163, 164 which are prepared for handing the codes to be written in the memories in the parts 105, 106, 107 to the memories in the other memories. A part of the image codes in the other processing code groups are also written in the memories via the lines 161, 162, 163, 164.

Therefore, also in the encoding device shown in Figures 10 and 11, each of the parts 105, 106, 107 can refer a part of the image codes of the other processing code groups.

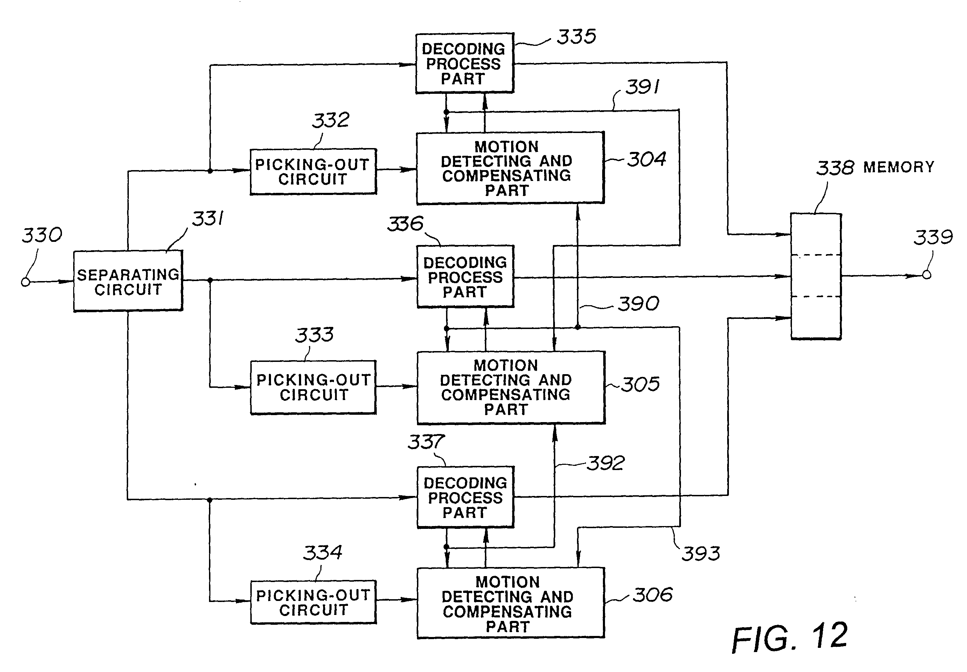

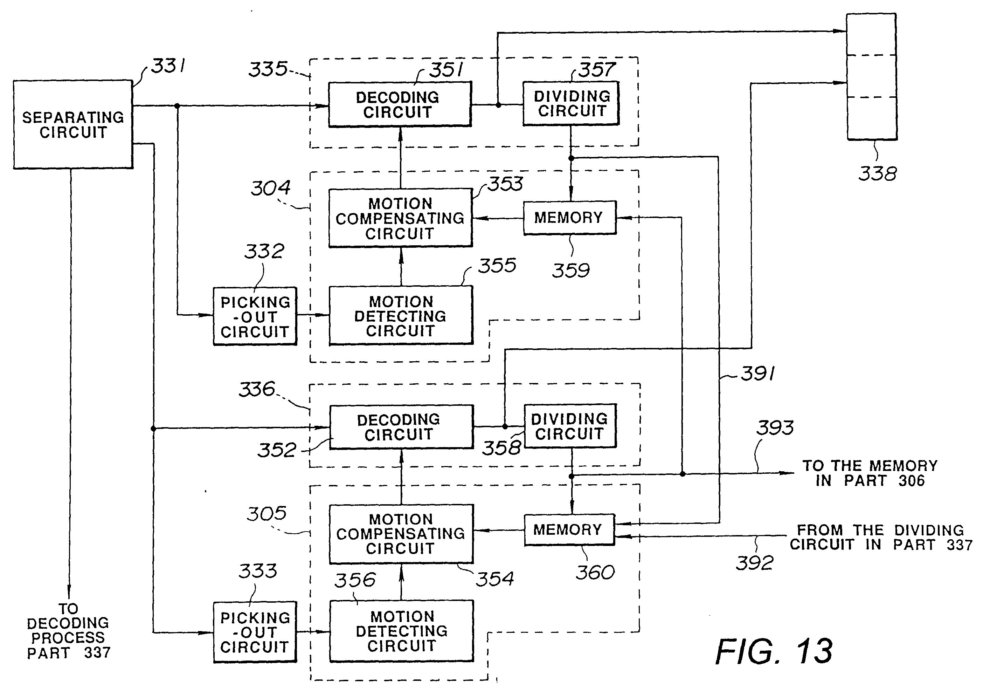

Figure 12 shows a decoding device corresponding to the encoding device shown in Figure 10. Figure 13 shows in greater detail the decoding device shown in Figure 12. In the Figures 12 and 13, the same numbers are also used for the similar elements in Figures 8 and 9.

The decoding device shown in Figures 12 and 13 has lines 390, 391, 392, 393 which are prepared for handing the codes to be written in the memories in the parts 304, 305, 306 to the memories in the other memories. A part of the restored image codes in the other processing code groups are also written in the memories via the lines 390, 391, 392, 393.

Therefore, also in the decoding device shown in Figures 12 and 13, each of the parts 304,305,306 can refer a part of the image signal of the other processing code groups. The decoding device shown in Figures 12 and 13 also has the same effects as the device shown in Figure 8 and 9.

As mentioned above, each of the embodiments of this invention slows the processing speeds required for processing an image signal which is to be compensated for motion. In short, each of them can handle a higher speed signal than prior devices.

**Claims**

1. An image coding device comprising input means (100, 101) for inputting image data representing sequential video frames and spatially dividing each video frame into a plurality of sub-image groups; and a plurality of processing means for processing the respective sub-image groups, each processing means including:

   an encoding means (210, 211) for encoding a respective one of said sub-image groups;
   a motion detecting and compensating means (105, 106, 107) for detecting motion between consecutive video frames and for providing motion compensating data to its associated encoding means; and
   a local decoding means (212, 213) for generating locally decoded data for use by said motion detecting and compensating means;
   the device further comprising means (127) for composing an encoded output signal from the respective outputs of said encoding means; and **characterized**
   **in that** an individual first dividing means (115, 116, 117) is connected to each said motion detecting and compensating means for dividing the sub-image group associated therewith into a plurality of code blocks;
   **in that** each motion detecting and compensating means includes means (206, 207, 208) for detecting motion of the image data of a code block of a present frame by comparing each code block to image data in a seeking area, the seeking area being an area of a previous frame that encompasses a corresponding code block of the previous frame;

**in that** said local decoding means are connected to second dividing means (228, 229) for dividing the outputs of the respective local decoding means into code blocks corresponding to the code blocks output by said first dividing means and for supplying the divided locally decoded image data to the associated motion detecting and compensating means; and

**in that** said device further comprises a plurality of transfer means (111, 112, 113, 114) each interconnecting respective pairs of said motion compensating and detecting means,

whereby any one motion detecting and compensating means is adapted to detect the motion of image data at a boundary between its associated sub-image group and an adjacent sub-image group by comparing the image data of the code block at the boundary to image data in a corresponding seeking area in an adjacent sub-image group of the previous frame utilising locally decoded image data supplied by said transfer means.

2. A device according to claim 1, wherein each motion detecting and compensating means includes a memory (208, 209) connected to the output of the associated dividing means and to said transfer means.

3. A device according to either one of claims 1 or 2, wherein each encoding means includes calculation means for calculating the difference between image data of the frame to be encoded and image data of the previous frame obtained in accordance with the output of said motion detecting and compensating means.

4. A device according to any preceding claim, wherein each motion detecting and compensating means is adapted to detect motion vectors which indicate the directions and extents of image movement.

5. A device according to any preceding claim, wherein each encoding means includes an orthogonally transforming means for orthogonally transforming image data of each of the code blocks.

6. An image decoding device for decoding image data encoded by the apparatus as claimed in any of claims 1 to 5, comprising:

   input means (330) for inputting the encoded image data, the encoded image data being encoded to compensate for motion, and including motion data for obtaining the encoded image data;
   dividing means (331) for dividing the coded input image data into a plurality of coded sub-image groups;
   a plurality of processing means for processing the respective coded sub-image groups, each processing means including:

   a decoding means (335, 336, 337) for decoding a respective one of the plurality of coded sub-image groups by using the input motion data; and
   a motion detecting and compensating means (304, 305, 306) associated with an individual decoding means for detecting motion data;
   the device further comprising transfer means (371, 372, 373, 374) interconnecting respective pairs of said motion detecting and compensating means for transferring image data between said pairs of motion detecting and compensating means whereby a given decoding means can decode the encoded image data of another sub-image group in accordance with the motion data.

7. An image decoding device according to claim 6, wherein each decoding means comprises a decoding processing circuit (335, 336, 337) connected to the output of said dividing means, which output being also supplied <u>via</u> a respective circuit (332, 333, 334) for picking out vector codes from the image data, to a respective motion detecting and compensating circuit.

8. An image decoding device according to either of claims 6 or 7, wherein each decoding means includes an addition circuit for adding codes of a previous frame to differential codes which indicate the difference between codes of a present frame and the codes of the previous frame, and wherein each motion detecting and compensating means comprises motion compensation means for supplying correlative codes of the previous frame to the addition circuit by varying the timing to be supplied in accordance with the motion data.

9. An image decoding device according to any one of claims 6 to 8, wherein said input means further inputs motion vector data which indicate the directions and extents of motions of image data of encoding blocks and wherein said motion detecting and compensating means detects the motion vector data input by said input means.

**Patentansprüche**

1. Bildcodiervorrichtung mit einer Eingabeeinrichtung (100, 101) zum Eingeben von Bilddaten, die aufeinanderfolgende Videorahmen darstellen, und zum räumlichen Teilen jedes Videorahmens in eine Vielzahl von Nebenbildgruppen; und mit einer Vielzahl von Verarbeitungseinrichtungen zum Verarbeiten der jeweiligen Nebenbildgruppen, wobei jede Verarbeitungseinrichtung enthält:

   eine Codiereinrichtung (210, 211) zum Codieren einer jeweiligen einen aus den Nebenbildgruppen;
   eine Bewegungserfassungs- und -ausgleichseinrichtung (105, 106, 107) zum Erfassen einer Bewegung zwischen aufeinanderfolgenden Videorahmen und zum Bereitstellen von Bewegungsausgleichsdaten für ihre verbundene Codiereinrichtung; und
   eine lokale Decodiereinrichtung (212, 213) zum Erzeugen von lokal decodierten Daten zur Verwendung durch die Bewegungserfassungs- und -ausgleichseinrichtung;
   wobei die Vorrichtung weiter eine Einrichtung (127) zum Zusammensetzen eines codierten Ausgabesignals aus den jeweiligen Ausgaben der Codiereinrichtung umfaßt; und

   **dadurch gekennzeichnet, daß**

   eine einzelne erste Teilungseinrichtung (115, 116, 117) mit jeder Bewegungserfassungs- und -ausgleichseinrichtung zum Teilen der damit verbundenen Nebenbildgruppe in eine Vielzahl von Codeblöcken verbunden ist; **und daß**
   jede Bewegungserfassungs- und -ausgleichseinrichtung eine Einrichtung (206, 207, 208) zum Erfassen einer Bewegung der Bilddaten eines Codeblocks eines vorliegenden Rahmens durch Vergleichen jedes Codeblocks mit Bilddaten bei einem Suchbereich enthält, wobei der Suchbereich ein Bereich eines vorangehenden Rahmens ist, der einen entsprechenden Codeblock des vorangehenden Rahmens umfaßt; **und daß**
   die lokale Decodiereinrichtung mit einer zweiten Teilungseinrichtung (228, 229) zum Teilen der Ausgaben der jeweiligen lokalen Decodiereinrichtung in Codeblöcke entsprechend den durch die erste Teilungseinrichtung ausgegebenen Codeblöcken und zum Führen der geteilten lokalen decodierten Bilddaten zu der verbundenen Bewegungserfassungs- und -ausgleichseinrichtung verbunden ist; **und daß**
   die Vorrichtung weiter eine Vielzahl von Übertragungseinrichtungen (111, 112, 113, 114), von denen jede jeweilige Paare der Bewegungsausgleichs- und -erfassungseinrichtung verbindet, umfaßt, wodurch irgendeine Bewegungserfassungs- und -ausgleichseinrichtung angepaßt ist, um die Bewegung von Bilddaten bei einer Grenze zwischen ihrer verbundenen Nebenbildgruppe und einer benachbarten Nebenbildgruppe durch Vergleichen der Bilddaten des Codeblocks bei der Grenze mit Bilddaten bei einem entsprechenden Suchbereich bei einer benachbarten Nebenbildgruppe des vorangehenden Rahmens, die durch die Übertragungseinrichtung zugeführte lokal decodierte Bilddaten verwendet, zu erfassen.

2. Vorrichtung nach Anspruch 1,
   **dadurch gekennzeichnet, daß**
   jede Bewegungserfassungs- und -ausgleichseinrichtung einen Speicher (208, 209) enthält, der mit dem Ausgang der verbundenen Teilungseinrichtung und mit der Übertragungseinrichtung verbunden ist.

3. Vorrichtung nach einem der Ansprüche 1 oder 2,
   **dadurch gekennzeichnet, daß**
   jede Codiereinrichtung eine Berechnungseinrichtung zum Berechnen der Differenz zwischen Bilddaten des zu codierenden Rahmens und Bilddaten des vorangehenden Rahmens, die gemäß der Ausgabe der Bewegungserfassungs- und -ausgleichseinrichtung erhalten werden, enthält.

4. Vorrichtung nach einem vorangehenden Anspruch,
   **dadurch gekennzeichnet, daß**
   jede Bewegungserfassungs- und -ausgleichseinrichtung angepaßt ist, um Bewegungsvektoren, die die Richtungen und Ausmaße einer Bildbewegung anzeigen, zu erfassen.

5. Vorrichtung nach einem vorangehenden Anspruch,
   **dadurch gekennzeichnet, daß**

jede Codiereinrichtung eine Orthogonaltransformationseinrichtung zum Orthogonaltransformieren von Bilddaten von jedem der Codeblöcke enthält.

6. Bilddecodiervorrichtung zum Decodieren von Bilddaten, die durch die Vorrichtung nach einem der Ansprüche 1 bis 5 codiert sind, mit:

einer Eingabeeinrichtung (330) zum Eingeben der codierten Bilddaten, wobei die codierten Bilddaten zum Ausgleichen einer Bewegung codiert sind und Bewegungsdaten zum Erhalten der codierten Bilddaten enthalten;

einer Teilungseinrichtung (331) zum Teilen der codierten eingegebenen Bilddaten in eine Vielzahl von codierten Nebenbildgruppen;

einer Vielzahl von Verarbeitungseinrichtungen zum Verarbeiten der jeweiligen codierten Nebenbildgruppen, wobei jede Verarbeitungseinrichtung umfaßt:

eine Decodiereinrichtung (335, 336, 337) zum Decodieren einer jeweiligen einen aus der Vielzahl von codierten Nebenbildgruppen unter Verwendung der eingegebenen Bewegungsdaten; und

eine Bewegungserfassungs- und -ausgleichseinrichtung (304, 305, 306), die mit einer einzelnen Decodiereinrichtung verbunden ist, zum Erfassen von Bewegungsdaten;

wobei die Vorrichtung weiter eine Übertragungseinrichtung (371, 372, 373, 374) umfaßt, die jeweilige Paare der Bewegungserfassungs- und -ausgleichseinrichtung zum Übertragen von Bilddaten zwischen den Paaren der Bewegungserfassungs- und -ausgleichseinrichtung verbindet, wodurch eine gegebene Decodiereinrichtung die codierten Bilddaten einer anderen Nebenbildgruppe gemäß den Bewegungsdaten decodieren kann.

7. Bilddecodiervorrichtung nach Anspruch 6,
**dadurch gekennzeichnet, daß**
jede Decodiereinrichtung eine Decodierverarbeitungsschaltung (335, 336, 337) umfaßt, die mit dem Ausgang der Teilungseinrichtung verbunden ist, wobei der Ausgang ebenso über eine jeweilige Schaltung (332, 333, 334) zum Herausführen von Vektorcodes aus den Bilddaten zu einer jeweiligen Bewegungserfassungs- und -ausgleichsschaltung geführt ist.

8. Bilddecodiervorrichtung nach einem der Ansprüche 6 oder 7,
**dadurch gekennzeichnet, daß**

jede Decodiereinrichtung eine Additionsschaltung zum Addieren von Codes eines vorangehenden Rahmens zu Differenzcodes, die die Differenz zwischen Codes eines vorliegenden Rahmens und den Codes des vorangehenden Rahmens anzeigen, enthält, **und daß**

jede Bewegungserfassungs- und -ausgleichseinrichtung eine Bewegungsausgleichseinrichtung zum Führen von korrelativen Codes des vorangehenden Rahmens zu der Additionsschaltung durch Ändern der Zeitgebung, die in Übereinstimmung mit den Bewegungsdaten zuzuführen ist, umfaßt.

9. Bilddecodiervorrichtung nach einem der Ansprüche 6 bis 8,
**dadurch gekennzeichnet, daß**

die Eingabeeinrichtung weiter Bewegungsvektordaten, die die Richtungen und Ausmaße von Bewegungen von Bilddaten von Codierblöcken anzeigen, eingibt, **und daß**

die Bewegungserfassungs- und -ausgleichseinrichtung die Bewegungsvektordaten, die durch die Eingabeeinrichtung eingegeben sind, erfaßt.

**Revendications**

1. Dispositif de codage d'image, comprenant un moyen (100, 101) d'entrée pour introduire des données d'image représentant des trames vidéo séquentielles et diviser spatialement chaque trame vidéo en une pluralité de groupes d'images secondaires ; et une pluralité de moyens de traitement pour traiter les groupes respectifs d'images secondaires, chaque moyen de traitement comportant :

un moyen (210, 211) de codage pour coder un groupe respectif desdits groupes d'images secondaires ;

un moyen (105, 106, 107) de détection et de compensation de déplacement pour détecter un déplacement entre des trames vidéo consécutives et pour fournir des données de compensation de déplacement à son moyen de codage associé ; et

des moyens (212, 213) de décodage local pour générer des données décodées localement, destinées à être utilisées par ledit moyen de détection et de compensation de déplacement ;

le dispositif comprenant en outre un moyen (127) pour composer un signal de sortie codé en provenance des sorties respectives dudit moyen de codage; et **caractérisé**

**en ce qu'**un premier moyen individuel (115, 116, 117) de division est connecté à chacun desdits moyens de détection et de compensation de déplacement pour diviser le groupe d'images secondaires associé avec celui-ci en une pluralité de blocs de code ;

**en ce que** chaque moyen de détection et de compensation de déplacement comporte un moyen (206, 207, 208) pour détecter un déplacement des données d'image d'un bloc de code d'une trame présente par comparaison de chaque bloc de code à des données d'image dans une zone de recherche, la zone de recherche étant une zone d'une trame précédente qui entoure un bloc de code correspondant de la trame précédente ;

**en ce que** lesdits moyens de décodage local sont connectés à un deuxième moyen (228, 229) de division pour diviser les sorties du moyen respectif de décodage local en blocs de code correspondant aux blocs de code délivrés par ledit premier moyen de division et pour appliquer les données d'image divisées, décodées localement, au moyen associé de détection et de compensation de déplacement ; et

**en ce que** ledit dispositif comprend en outre une pluralité de moyens (111, 112, 113, 114) de transfert interconnectant chacun des paires respectives desdits moyens de détection et de compensation de déplacement, à la suite de quoi un moyen quelconque de détection et de compensation de déplacement est apte à détecter le déplacement de données d'image au niveau d'une limite entre son groupe associé d'images secondaires et un groupe adjacent d'images secondaires par comparaison des données d'image du bloc de code au niveau de la limite à des données d'image dans une zone de recherche correspondante dans un groupe adjacent d'images secondaires de la trame précédente, en utilisant des données d'image décodées localement appliquées par ledit moyen de transfert.

2. Dispositif selon la revendication 1, dans lequel chaque moyen de détection et de compensation de déplacement comporte une mémoire (208, 209) connectée à la sortie du moyen de division associé et audit moyen de transfert.

3. Dispositif selon l'une ou l'autre des revendications 1 ou 2, dans lequel chaque moyen de codage comporte un moyen de calcul pour calculer la différence entre des données d'image de la trame à coder et des données d'image de la trame précédente, obtenue en fonction de la sortie dudit moyen de détection et de compensation de déplacement.

4. Dispositif selon l'une quelconque des revendications précédentes, dans lequel chaque moyen de détection et de compensation de déplacement est apte à détecter des vecteurs de déplacement qui indiquent les directions et les amplitudes de déplacement d'image.

5. Dispositif selon l'une quelconque des revendications précédentes, dans lequel chaque moyen de codage comporte un moyen de transformation de manière orthogonale pour transformer de manière orthogonale des données d'image de chacun des blocs de code.

6. Dispositif de décodage d'image pour décoder des données d'image codées par l'appareil selon l'une quelconque des revendications 1 à 5, comprenant :

un moyen (330) d'entrée pour introduire les données d'image codées, les données d'image codées étant codées pour compenser un déplacement, et comportant des données de déplacement pour obtenir les données d'image codées ;

un moyen (331) de division pour diviser les données d'image introduites codées, en une pluralité de groupes codés d'images secondaires ;

une pluralité de moyens de traitement pour traiter les groupes respectifs codés d'images secondaires, chaque moyen de traitement comportant :

un moyen (335, 336, 337) de décodage pour décoder un groupe respectif de la pluralité de groupes codés d'images secondaires en utilisant les données de déplacement introduites ; et

un moyen (304, 305, 306) de détection et de compensation de déplacement associé avec un moyen de décodage individuel pour détecter des données de déplacement ;

le dispositif comprenant en outre un moyen (371, 372, 373, 374) de transfert interconnectant des paires respectives desdits moyens de détection et de compensation de déplacement pour transférer des données d'image entre lesdites paires de moyens de détection et de compensation de déplacement, à la suite de quoi un moyen de décodage donné peut décoder les données d'image codées d'un autre groupe d'images secondaires en fonction des données de déplacement.

7. Dispositif de décodage d'image selon la revendication 6, dans lequel chaque moyen de décodage comprend un circuit (335, 336, 337) de traitement de décodage connecté à la sortie dudit moyen de division, cette sortie étant aussi appliquée, par l'intermédiaire d'un circuit respectif (332, 333, 334) pour saisir des codes vectoriels à partir des données d'image, à un circuit respectif de détection et de compensation de déplacement.

8. Dispositif de décodage d'image selon l'une ou l'autre des revendications 6 ou 7, dans lequel chaque moyen de décodage comporte un circuit d'addition pour additionner des codes d'une trame précédente à des codes différentiels qui indiquent la différence entre des codes d'une trame présente et les codes de la trame précédente, et dans lequel chaque moyen de détection et de compensation de déplacement comprend un moyen de compensation de déplacement pour appliquer des codes de corrélation de la trame précédente au circuit d'addition en faisant varier la synchronisation à appliquer en fonction des données de déplacement.

9. Dispositif de décodage d'image selon l'une quelconque des revendications 6 à 8, dans lequel ledit moyen d'entrée introduit en outre des données de vecteur de déplacement qui indiquent les directions et les amplitudes de déplacements de données d'image de blocs de codage et dans lequel ledit moyen de détection et de compensation de déplacement détecte les données de vecteur de déplacement introduites par ledit moyen d'entrée.

**FIG.1**

A/D CONVERTING CIRCUIT — 2

DIVIDING AND TIME-BASE EXPANDING CIRCUIT — 29

30

ORTHOGONAL TRANSFORMATION CIRCUIT — 5

QUANTIZING CIRCUIT — 7

INVERSE-QUANTIZING CIRCUIT — 9

INVERSE-ORTHOGONAL TRANSFORMATION CIRCUIT — 11

IMAGE MEMORY — 14

MOTION COMPENSATING CIRCUIT — 16

LOOP-FILTER CIRCUIT — 18

MOTION VECTOR CALCULATING CIRCUIT — 21

VARIABLE LENGTH ENCODING CIRCUIT — 23

CODE MIXING CIRCUIT — 24

BUFFER MEMORY — 26

COMPOSING CIRCUIT — 32

IMAGE ENCODING CIRCUIT — 31a

IMAGE ENCODING CIRCUIT — 31b

IMAGE ENCODING CIRCUIT — 31c

IMAGE ENCODING CIRCUIT — 31d

**FIG.2**

15

33

34

GROUP A

GROUP B

GROUP C

GROUP D

# FIG.3

FIG.4

**FIG.5**

FIG.6

FIG.7

FIG.8

EP 0 577 310 B1

FIG.9

FIG. 10

EP 0 577 310 B1

FIG. 11

*101* MEMORY *102*

*118*
TO COMPOSING CIRCUIT 127

ENCODING CIRCUIT *210*
LOCAL DECODING CIRCUIT *212*
*228* DIVIDING CIRCUIT
*121*

*105*
*108*
MOTION COMPENSATING CIRCUIT *204*
MEMORY
*218* *208*

*115*
*206* *216*
DIVIDING CIRCUIT
MOTION DETECTING CIRCUIT

*119*
TO COMPOSING CIRCUIT 127

*213*
ENCODING CIRCUIT *211*
LOCAL DECODING CIRCUIT
*229* DIVIDING CIRCUIT
*121*

*109*

*106*
MOTION COMPENSATING CIRCUIT *205*
MEMORY
*219* *209*

*116*
*207* *217*
DIVIDING CIRCUIT
MOTION DETECTING CIRCUIT

*103*

*161*
*162*
*163*
*164*

FROM THE DIVIDING CIRCUIT IN THE PART 120

TO MEMORY IN THE PART 107

EP 0 577 310 B1

24

FIG. 12

EP 0 577 310 B1

FIG. 13

EP 0 577 310 B1